# EUROPEAN PATENT APPLICATION

(11) **EP 1 641 235 A1**
(43) Date of publication of application: **29.03.2006**
(21) Application number: 05019973.6
(22) Date of filing: 14.09.2005
(51) Int. Cl.: H04N 1/00, H04N 1/32, H04N 1/44

(54) **Method and apparatus for detecting alteration in image, and computer product**

(30) Priority: 24.09.2004 JP 2004277963; 06.07.2005 JP 2005197006
(71) Applicant: Ricoh Company, Ltd., Tokyo 143-8555 (JP)
(72) Inventor: Sugiura, Yoko, Ohta-ku Tokyo 143-8555 (JP); Hamatake, Masafumi, Ohta-ku Tokyo 143-8555 (JP)
(74) Representative: Schwabe - Sandmair - Marx

(57) **Abstract**

An apparatus for detecting an alteration in an image includes an alteration detecting unit (109) that detects the alteration in the image based on an electronic watermark embedded in the image, and an output processing unit (111) that outputs the image, when no alteration is detected in the image.

## Description

### CROSS-REFERENCE TO RELATED APPLICATIONS

The present document incorporates by reference the entire contents of Japanese priority document, 2004-277963 filed in Japan on September 24, 2004 and 2005-197006 filed in Japan on July 6, 2005.

### BACKGROUND OF THE INVENTION

### 1. Field of the Invention

The present invention relates to a technology for detecting an alteration in an image and controlling printing of the image based on information embedded in the image.

### 2. Description of the Related Art

With a development of information networking, electronic information created by other persons can be acquired easily. On the other hand, copyrighted information can be easily altered without permission of a creator. To prevent such alteration, a technology for embedding an electronic watermark in image data is attracting interest.

A conventional technology is disclosed in, for example, Japanese Patent Application Laid Open No. 2003-204429. A personal computer (PC) is typically used for embedding an electronic watermark in image data and detecting an alteration using the electronic watermark. In the conventional technology, it is considered that the problem of alteration is solved as long as a PC used for editing and outputting an image has a function of detecting the alteration.

However, when image data is output from a PC in which a software application for detecting the alteration is not installed, or when a malicious user attempts to output altered image data, the alteration cannot be detected by an image forming apparatus from which the image data is output.

### SUMMARY OF THE INVENTION

It is an object of the present invention to at least solve the problems in the conventional technology.

An apparatus according to one aspect of the present invention, which is for detecting an alteration in an image, includes an alteration detecting unit that detects the alteration in the image based on an electronic watermark embedded in the image; and an output processing unit that outputs the image, when no alteration is detected in the image.

An apparatus according to another aspect of the present invention, which is for detecting an alteration in an image, includes an alteration detecting unit that detects the alteration in a predetermined area of the image based on an electronic watermark embedded in the predetermined area; and a revision processing unit that performs a predetermined revision process on an area image indicating the predetermined area, when the alteration is detected in the predetermined area.

A method according to still another aspect of the present invention, which is for detecting an alteration in an image, includes detecting the alteration in the image based on an electronic watermark embedded in the image; and outputting the image, when no alteration is detected in the image.

A method according to still another aspect of the present invention, which is for detecting an alteration in an image, includes detecting the alteration in a predetermined area of the image based on an electronic watermark embedded in the predetermined area; and performing a predetermined revision process on an area image indicating the predetermined area, when the alteration is detected in the predetermined area.

A computer-readable recording medium according to still another aspect of the present invention stores a computer program that causes a computer to execute the above methods according to the present invention.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram of an image forming apparatus according to a first embodiment of the present invention;
FIG. 2 is a schematic of an example of an alert displayed on a monitor of a PC, when an alteration is detected in image data to be output from the image forming apparatus according to the first embodiment;
FIG. 3 is a schematic of an example of a screen displayed on a touch panel, when the image forming apparatus according to the first embodiment detects an alteration in image data;
FIG. 4 is a flowchart of a processing procedure for the image forming apparatus according to the first embodiment, from reception of a request to transmit image data from the PC to transmission of the image data to the PC;
FIG. 5 is a flowchart of a processing procedure for the image forming apparatus according to the first embodiment, from reception of image data and a request to print out the image data from the PC to printing of the image data;
FIG. 6 is a flowchart of a processing procedure for the image forming apparatus according to the first embodiment, from a user's operation of the touch panel to select image data to be printed out to printing of the image;
FIG. 7 is a schematic of a hardware configuration for realizing a function of the image forming apparatus according to the first embodiment;
FIG. 8 is a block diagram of an image forming apparatus according to a second embodiment of the present invention;
FIG. 9 is a schematic of an altered area marked out by the image forming apparatus according to the second embodiment;
FIG. 10 is a flowchart of a processing procedure for the image forming apparatus according to the second embodiment, from reception of image data and a request to print out the image data from the PC to printing of the image data;
FIG. 11 is a block diagram of an image forming apparatus according to a third embodiment of the present invention;
FIG. 12 is a detailed block diagram of an area determining unit shown in Fig. 11;
FIG. 13 is a schematic of an example of image data output by an output processing unit with revision processing performed on an altered area;
FIG. 14 is a flowchart of a processing procedure for the image forming apparatus according to the third embodiment, from reception of a request to transmit image data the PC to transmission of the image data to the PC; and
FIG. 15 is a flowchart of a processing procedure for the image forming apparatus according to the third embodiment, from reception of image data and a request to print out the image data from the PC to printing of the image data.

### DETAILED DESCRIPTION OF THE PREFERRED EMBODIMENTS

Exemplary embodiments of the present invention will be described in detail below with reference to the accompanying drawings. The present invention is not limited to these embodiments.

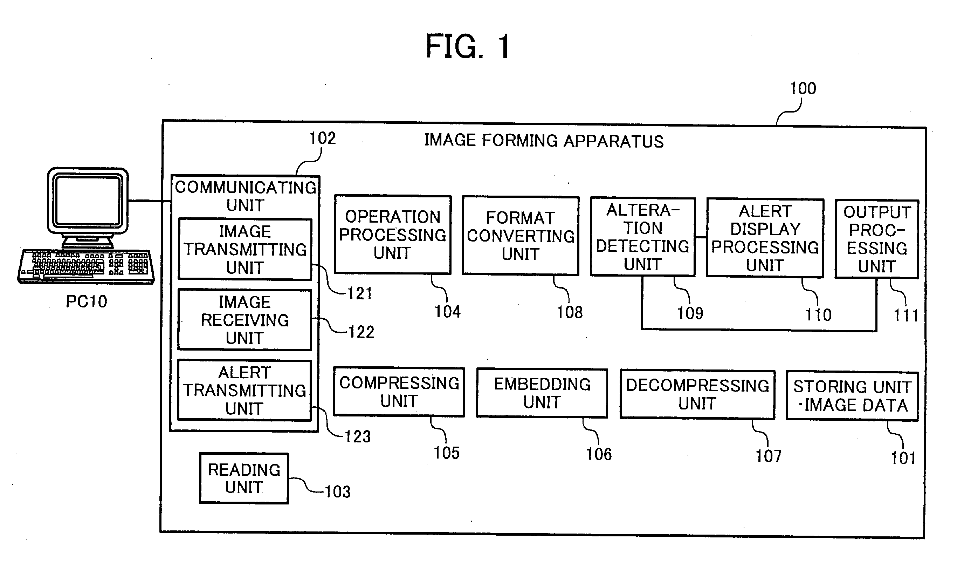

Fig. 1 is a block diagram of an image forming apparatus 100 according to a first embodiment of the present invention, having an alteration detecting function. The image forming apparatus 100 includes a storing unit 101, a communicating unit 102, a reading unit 103, an operation processing unit 104, a compressing unit 105, an embedding unit 106, a decompressing unit 107, a format converting unit 108, an alteration detecting unit 109, an alert-display processing unit 110, and an output processing unit 111. The image forming apparatus 100 detects whether alteration is performed in image data with an electronic watermark embedded in the image data. The image data is output only when alteration is not detected. The image forming apparatus 100 is connected to a PC 10 through a network.

The storing unit 101 stores image data. The image data includes print data, copy data, scanner data, or fax data. The image data can be in a Joint Photographic Experts Group (JPEG) format, a bitmap (BMP) format, or in a format including font data expressing characters, such as Portable Document Format (PDF) data.

The communicating unit 102 communicates with the PC 10, and includes an image transmitting unit 121, an image receiving unit 122, and an alert transmitting unit 123. The communicating unit 102 exchanges image data with the PC 10, receives an output request from the PC 10, and transmits an alert to the PC 10 when a request to output altered image data is received.

When a request to transmit image data is received from the PC 10, the image transmitting unit 121 acquires the corresponding image data from the storing unit 101, and transmits the image data to the PC 10.

The image receiving unit 122 receives from the PC 10 an output request or image data together with a request to store the image data into the storing unit 101.

When the alteration detecting unit 109 detects an alteration in image data that is requested to be output by the PC 10, the alert transmitting unit 123 transmits to the PC 10 an alert that the corresponding image data will not be output.

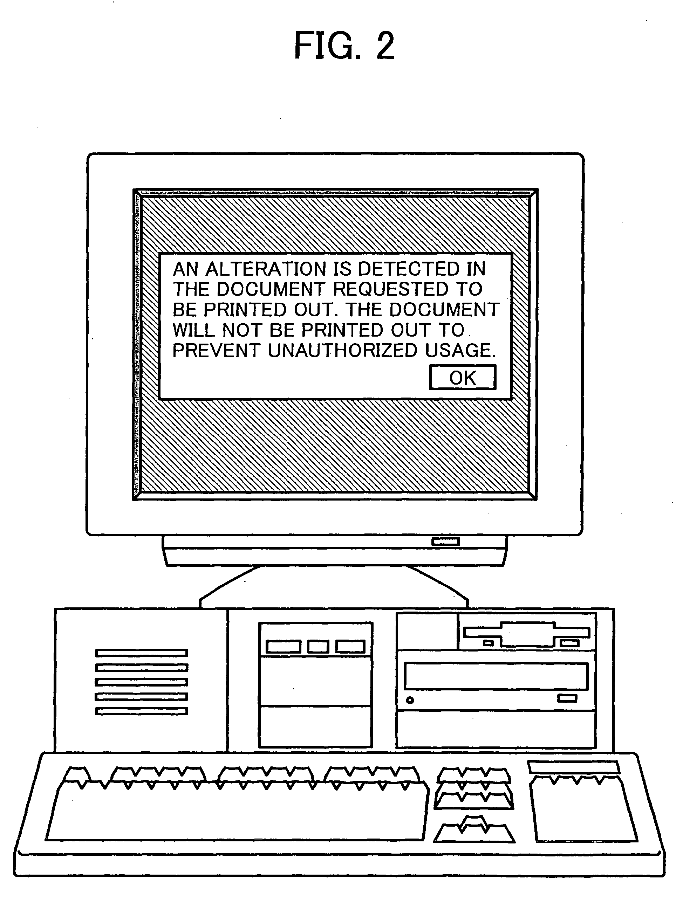

FIG. 2 is a schematic of an example of an alert displayed on a monitor of a PC 10, when the alteration is detected in image data to be output from the image forming apparatus 100. A user of the PC 10 is informed that the image data has been altered and thus will not be output from the image forming apparatus 100. Accordingly, the user is spared from moving from the PC 10 to the image forming apparatus 100 to confirm whether the image data is output, thus enhancing convenience.

Referring back to Fig. 1, the reading unit 103 is, for example, a scanner including a charge-coupled device (CCD). The reading unit 103 reads an original, and inputs image data of the original to the storing unit 101. The image data is stored with each pixel including red-green-blue (RGB) data, and each color having 256 gradation levels. A watermark can be embedded in each pixel.

The operation processing unit 104 processes instructions from a user input through a touch panel (not shown). For example, the operation processing unit 104 selects an input mode when image data is input, or selects image data to be output from the storing unit 101.

The compressing unit 105 compresses image data read by the reading unit 103. If image data with each pixel including RGB data with 256 gradation levels per color is stored in the storing unit 101 without being compressed, image data of one original would occupy a large memory space. Thus, the compressing unit 105 compresses the image data so as to make efficient use of memory space available in the storing unit 101.

The embedding unit 106 embeds an electronic watermark in image data before the image data is transmitted to the PC 10. According to the first embodiment, the electronic watermark corresponds to alteration detection information that is used for detecting whether alteration is performed. Watermark strength of the alteration detection information is weak, and therefore, the information is destructed when alteration is performed. An alteration is detected by detecting whether the alteration detection information is destructed. Furthermore, the embedding unit 106 embeds in the image data a flag that indicates whether alteration detection information is embedded. Watermark strength of the flag is strong enough so that the flag can be extracted even after the image data has been altered significantly. Accordingly, when alteration detection information is not extracted from image data, it is possible to determine whether alteration detection information was never embedded in the image data, or alteration detection information was embedded but was completely destructed due to significant alteration.

The decompressing unit 107 decompresses image data that was compressed by the compressing unit 105, so that the image data can be output by the output processing unit 111.

The format converting unit 108 converts a format of image data according to need, when an output request is received. For example, when a request to transmit scanner data is received from the PC 10, the format converting unit 108 converts the scanner data into a format viewable in the PC 10, such as a PDF format. Accordingly, any format of image data stored in the storage unit 101 can be converted to be viewed in the PC 10. Moreover, load on a communication line is alleviated by converting image data into a format with high-compressibility.

The alteration detecting unit 109 detects whether image data has been altered, based alteration detection information embedded in the image data. The alteration detecting unit 109 also detects whether a flag is embedded in the image data. When alteration detection information is not extracted from image data, but a flag is embedded in the image data, the alteration detecting unit 109 determines that alteration has been performed. Accordingly, the alteration detecting unit 109 detects whether alteration has been performed, even when the alteration detection information is completely destructed due to significant alteration.

When the alteration detecting unit 109 detects an alteration in image data, the alert-display processing unit 110 displays an alert on the touch panel that the image data has been altered, and the image data will not be output.

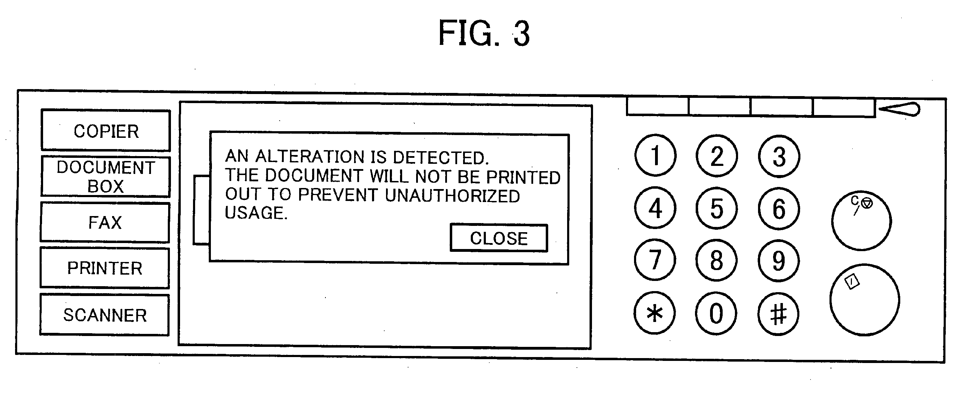

FIG. 3 is a schematic of an example of a screen displayed on a touch panel, when the image forming apparatus 100 detects an alteration in image data. By displaying an alert on the touch panel, a user who selected image data by operating the touch panel is notified that the image data has been altered and thus will not be output.

When the alteration detecting unit 109 does not detect an alteration in image data, or when an electronic watermark was never embedded in image data, the output processing unit 111 prints out the image data. On the other hand, when the alteration detecting unit 109 detects an alteration in image data, the output processing unit 111 does not output the image data. Accordingly, altered image data is prevented from leaking. Moreover, reliability of image data output from the image forming apparatus 100 is enhanced, because the image forming apparatus 100 does not output altered image data.

Image data stored in the storing unit 101 is not limited to image data received from the PC 10 or image data read by the reading unit 103. For example, the image data can be fax data received from a facsimile machine.

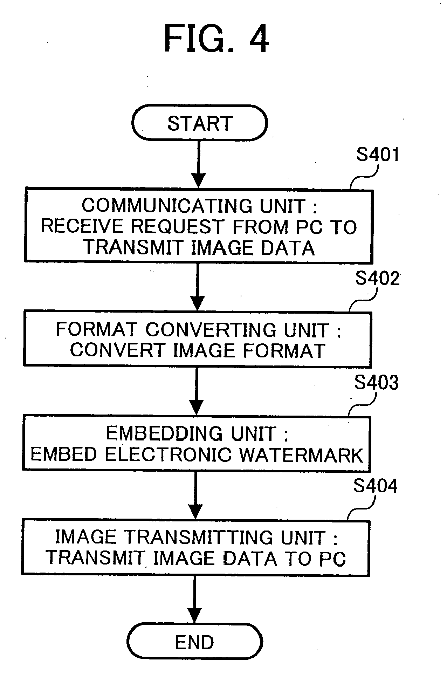

FIG. 4 is a flowchart of a processing procedure for the image forming apparatus 100, from reception of a request to transmit image data from the PC 10 to transmission of the image data to the PC 10.

The communicating unit 102 receives a request from the PC 10 to transmit image data stored in the storing unit 101 to the PC 10 (step S401).

The format converting unit 108 acquires the corresponding image data from the storing unit 101, and converts the image data into a format viewable in the PC 10 (step S402). When the corresponding image data is already in a format viewable in the PC 10, the format need not be converted.

The embedding unit 106 embeds an electronic watermark in the image data subjected to format conversion, or the image data not requiring format conversion (step S403). The embedding unit 106 embeds alteration detection information and a flag in the image data as the electronic watermark. Instead, the embedding unit 106 can confirm whether a flag is embedded in the image data, and embed alteration detection information only when it is determined that an electronic watermark is not embedded.

The image transmitting unit 121 transmits the image data embedded with the electronic watermark to the PC 10 (step 5404).

Accordingly, image data stored in the image forming apparatus 100 can be viewed in the PC 10 or other devices. Moreover, an alteration can be detected even when image data is altered in a device other than the image forming apparatus 100.

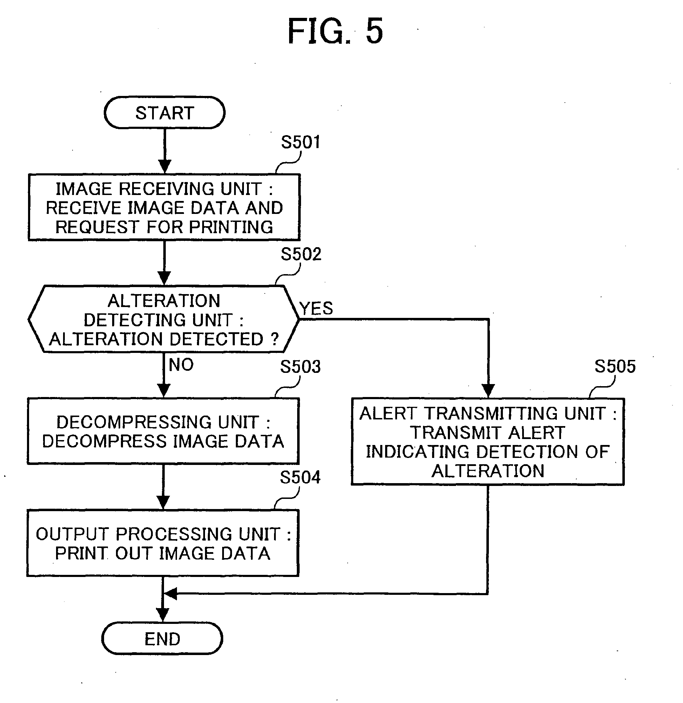

FIG. 5 is a flowchart of a processing procedure for the image forming apparatus 100, from reception of image data and a request to print out the image data from the PC 10 to printing of the image data.

The image receiving unit 122 receives image data and a request to print out the image data from the PC 10 (step S501). The image data received can be the image data that had been transmitted from the image forming apparatus 100 to the PC 10 by the processing shown in Fig. 4, or image data generated in the PC 10.

The alteration detecting unit 109 detects whether the image data received by the image receiving unit 122 has been altered (step S502). When alteration detection information embedded in the image data is destructed, the alteration detecting unit 109 determines that the image data has been altered. When alteration detection information is not extracted, but a flag is extracted, the alteration detecting unit 109 determines that the image data has been altered.

When the alteration detecting unit 109 does not detect an alteration (No at step S502), the decompressing unit 107 decompresses the image data according to need (step S503). Specifically, when the image data is compressed by the compressing unit 105, and the image data needs to be decompressed in order to be output, the decompressing unit 107 decompresses the image data. The output processing unit 111 prints out the image data on paper (step S504).

When the alteration detecting unit 109 detects an alteration (Yes at step S502), the alert transmitting unit 123 transmits an alert to the PC 10 that the image data transmitted from the PC 10 has been altered and thus will not be output (step S505). An alert is displayed at the PC 10, as shown in Fig. 2.

Thus, the image forming apparatus 100 detects whether image data received from the PC 10 or other devices has been altered, and controls output of the image data. Accordingly, altered image data is prevented from leaking or spreading on paper print-outs.

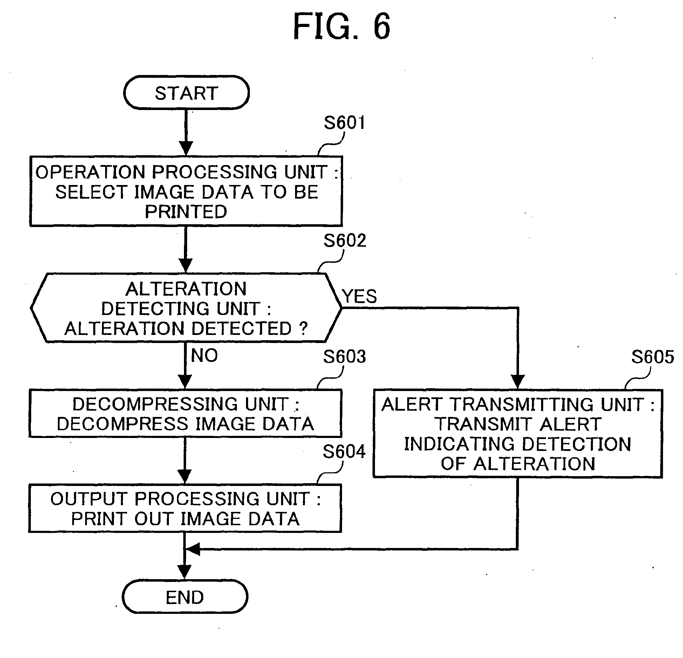

FIG. 6 is a flowchart of a processing procedure for the image forming apparatus 100, from a user's operation of the touch panel to select image data to be printed out to printing of the image.

A user operates the touch panel to select image data to be printed out, and the operation processing unit 104 selects the image data from the storing unit 101 (step S601). It is assumed that the user selects image data among the image data stored in the storing unit 101.

The alteration detecting unit 109 acquires from the storing unit 101 the image data selected by the operation processing unit 104, and detects whether the image data has been altered; in the same manner as step S502 in the flowchart of Fig. 5 (step S602).

When the alteration detecting unit 109 does not detect an alteration (No at step S602), the decompressing unit 107 decompresses the image data according to need (step S603) . The output processing unit 111 prints out the image data on paper (step S604).

When the alteration detecting unit 109 detects an alteration (Yes at step S602), the alert-display processing unit 110 displays on the touch panel that the image data has been altered, and thus will not be output, as shown in Fig. 3 (step S605).

Thus, the image forming apparatus 100 detects whether image data stored in the storing unit 101 has been altered, and control output of the image data. In another example, image data transmitted from the image forming apparatus 100 to the PC 10 is altered in the PC 10, and the altered image data is then transmitted to and stored in the image forming apparatus 100, and the image forming apparatus 100 detects an alteration in the corresponding image data.

Accordingly, it is possible to prevent output of altered image data when a print out request is received from the touch panel of the image forming apparatus 100.

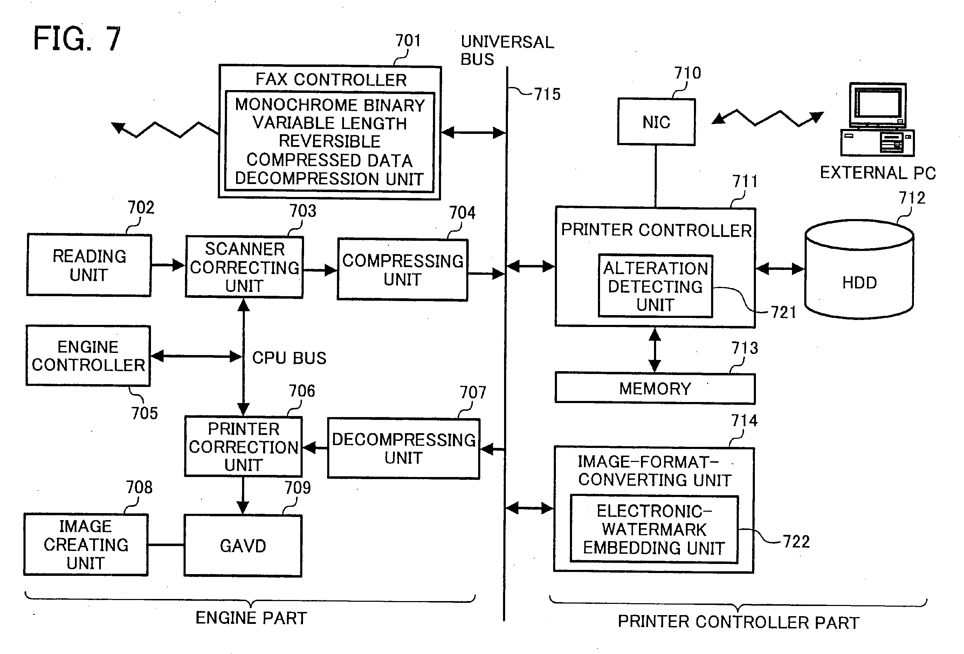

FIG. 7 is a schematic of a hardware configuration for realizing a function of the image forming apparatus 100. The image forming apparatus 100 includes an engine part and a printer controller part connected through a universal bus 715.

The engine part includes a fax controller 701, a reading unit 702, a scanner corrector 703, a compressing unit 704, an engine controller 705, a printer corrector 706, a decompressing unit 707, an image creating unit 708, and a GAVD 709.

The printer controller part includes a network interface control (NIC) 710, a printer controller 711, a hard disk drive (HDD) 712, a memory 713, and an image-format converting unit 714.

The printer controller 711 includes an alteration detecting unit 721, and the image-format converting unit 714 includes an electronic-watermark embedding unit 722.

When taking a copy of an original, image data read by the reading unit 702 is corrected by the scanner corrector 703, compressed by the compressing unit 704, temporarily saved in the memory 713 via the printer controller 711, and then accumulated in the HDD 712. The image data accumulated in the HDD 712 is temporarily saved in the memory 713 via the printer controller 711, decompressed by the decompressing unit 707, corrected by the printer corrector 706, and then output via the GAVD 709 and the image creating unit 708. Accordingly, when a copy of an original is taken, image data of the original is accumulated in the HDD 712 at the same time. Therefore, the same image data can be output again by operating the touch panel.

When image data is to be accumulated in the HDD 712 without taking a copy, in addition to the processes of being read by the reading unit 702 to being stored in the HDD 712, the image data is input to the printer controller 711 via the NIC 710, temporarily saved in the memory 713, and then stored in the HDD 712.

When the image data accumulated in the HDD 712 is to be transmitted to an external PC, the image data in the HDD 712 is saved in the memory 713 via the printer controller 711. The image-format converting unit 714 converts a format of the image data, the electronic-watermark embedding unit 722 embeds an electronic watermark in the image data, and the image data is transmitted to the external PC via the printer controller 711 and the NIC 710.

When image data received from an external PC is to be printed out, image data is received via the NIC 710 and the printer controller 711, and the alteration detecting unit 721 detects whether the image has been altered. The image data is temporarily saved in the memory 713. When an alteration is not detected in the image data, the image data is transmitted via the printer controller 711 to be decompressed by the decompressing unit 707, corrected by the printer corrector 706, and output via the GAVD 709 and the image creating unit 708.

According to the first embodiment, when an alteration is detected, printing is cancelled without performing the processes from the decompressing by the decompressing unit 707 and thereafter.

Embodiments described hereafter have the same hardware configuration as the first embodiment, except that the printer corrector 706 performs a revision processing such as marking out an altered area, when an alteration is detected in image data.

An alteration detection program executed by the image forming apparatus 100 is stored in a medium such as a read only memory (ROM).

The alteration detection program according to the first embodiment can be stored in a computer-readable recording medium in an installable or executable format, such as a compact disc read only memory (CD-ROM), a flexible disk (FD), a CD recordable (CD-R), a digital versatile disk (DVD), and so forth.

Moreover, the alteration detection program can be stored in a computer connected to a network such as the Internet, so as to be downloaded via the network. Furthermore, the alteration detection program can be provided or distributed through a network such as the Internet.

The image forming apparatus 100 can be a multi-function printer (MFP) including a plurality of image processing functions.

In the image forming apparatus 100 according to the first embodiment, image data is not output when an alteration is detected. Accordingly, altered image data is prevented from leaking. Moreover, reliability of image data output from the image forming apparatus 100 is enhanced. Furthermore, convenience is improved because image data can be output according to a request from the PC 10 or other devices.

The image forming apparatus 100 according to the first embodiment does not output image data when an alteration is detected. However, in some cases, the output need not be cancelled. For example, when an alteration is detected in image data, but a user desires to refer to areas other than the altered area, the image data can be output as long as the user can recognize the altered area. According to a second embodiment of the present invention, when an alteration is detected in a specific block of image data, an image forming apparatus 800 revises the block before outputting the image data.

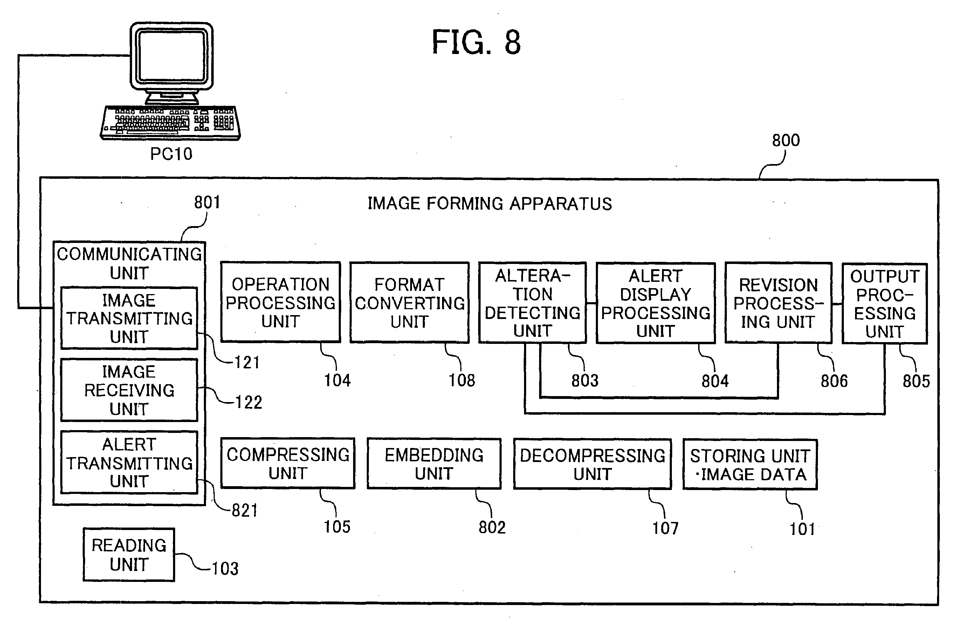

FIG. 8 is a block diagram of an image forming apparatus 800 according to the second embodiment. The differences between the image forming apparatus 100 according to the first embodiment shown in Fig. 1 and the image forming apparatus 800 are as follows. Instead of the communicating unit 102, the embedding unit 106, the alteration detecting unit 109, the alert-display processing unit 110, and the output processing unit 111 in the image forming apparatus 100, the image forming apparatus 800 includes a communicating unit 801, an embedding unit 802, an alteration detecting unit 803, an alert-display processing unit 804, and an output processing unit 805. Furthermore, a revision processing unit 806 is added to the image forming apparatus 800. Otherwise, components common to the image forming apparatus 100 and the image forming apparatus 800 are denoted by the same reference numerals, and overlapping descriptions are omitted.

The communicating unit 801 includes the image transmitting unit 121, the image receiving unit 122, and an alert transmitting unit 821. The communicating unit 801 exchanges image data with the PC 10, receives an output request from the PC 10, and transmits an alert to the PC 10 when a request to output altered image data is received.

When the alteration detecting unit 803 detects an alteration in image data that is requested to be output by the PC 10, the alert transmitting unit 821 transmits to the PC 10 an alert that the corresponding image data will be output with the altered area marked out.

According to the second embodiment, image data is assumed to be divided into blocks. The embedding unit 802 embeds an electronic watermark in each block of image data before the image data is transmitted to the PC 10. The information embedded is the same as that of the first embodiment, however, in the second embodiment, alteration detection information is embedded in each block of the image data, and one flag is embedded for the entire image data. Thus, it is possible to detect an alteration by block. The size of each block can be, for example, 24 pixels x 24 pixels, or any appropriate size for detecting an alteration.

The alteration detecting unit 803 detects whether alteration is performed in each block of image data, based on alteration detection information embedded in each block. Furthermore, by detecting a flag embedded in image data, the alteration detecting unit 803 detects whether alteration detection information was embedded in the image data. Specifically, when alteration detection information is not extracted from any of the blocks in the image data, but a flag is embedded in the image data; the alteration detecting unit 803 determines that alteration has been performed in all of the blocks.

When the alteration detecting unit 803 detects an alteration in image data, the alert-display processing unit 804 displays on the touch panel that the image data has been altered, and thus the altered area will be marked out in the output.

When the alteration detecting unit 803 detects an alteration in image data, the revision processing unit 806 performs a revision processing on an altered block of the image data.

According to the second embodiment, the revision processing is performed by marking out a block in which alteration is detected. Thus, when the image data is printed out or displayed on a screen, a user is prevented from referring to the altered contents.

When the alteration detecting unit 803 does not detect an alteration in image data, or when an electronic watermark is not embedded in image data, the output processing unit 805 prints out the corresponding image data on paper. On the other hand, when the alteration detecting unit 803 detects an alteration in image data, the revision processing unit 806 performs a revision processing on an altered block of the image data, and the output processing unit 805 prints out the image data with the altered block revised (i.e., marked out).

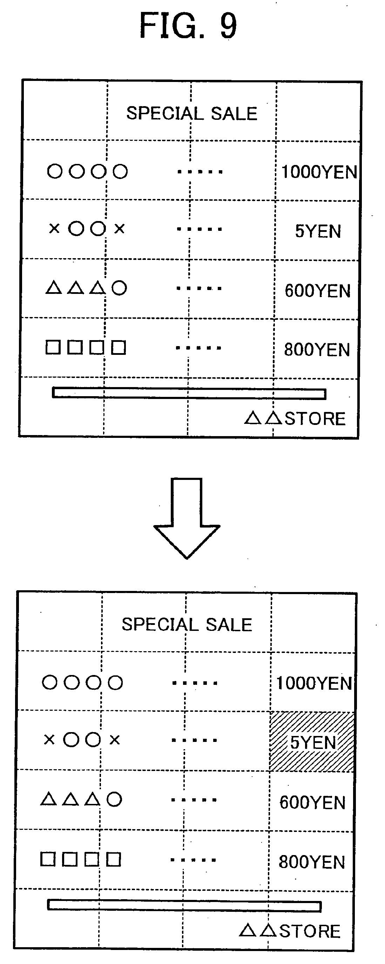

FIG. 9 is a schematic of an altered area marked out by the image forming apparatus 800. The top diagram shows that image data is divided into blocks as indicated by dashed lines. Alteration detection information is embedded in each block. When the alteration detecting unit 803 detects an alteration in the image data, the revision processing unit 806 marks out a block in which the alteration is detected, and the output processing unit 805 prints out the image data with the altered block marked out, as shown in the bottom diagram. Specifically, the block including characters of 5 yen is altered, and is thus marked out, so that a user can recognize the altered area in the output image data. Accordingly, altered image data is prevented from leaking or spreading on paper print-outs. Moreover, reliability of image data output from the image forming apparatus 800 is enhanced, because an altered block is marked out so that a user can recognize where the image data has been altered.

According to the second embodiment, an altered block is marked out by shading the block, and therefore, a user can see the altered data through the shading. However, the altered block can be marked out with one color such as black, so that a user cannot see the data.

A processing performed by the image forming apparatus 800 from when a request to transmit image data is received from the PC 10 to when the image data is transmitted to the PC 10 is the same as that shown in Fig. 4 performed by the image forming apparatus 100 according to the first embodiment, except that step S403 is performed by the embedding unit 802 in the image forming apparatus 800. Therefore, a description of the processing is omitted.

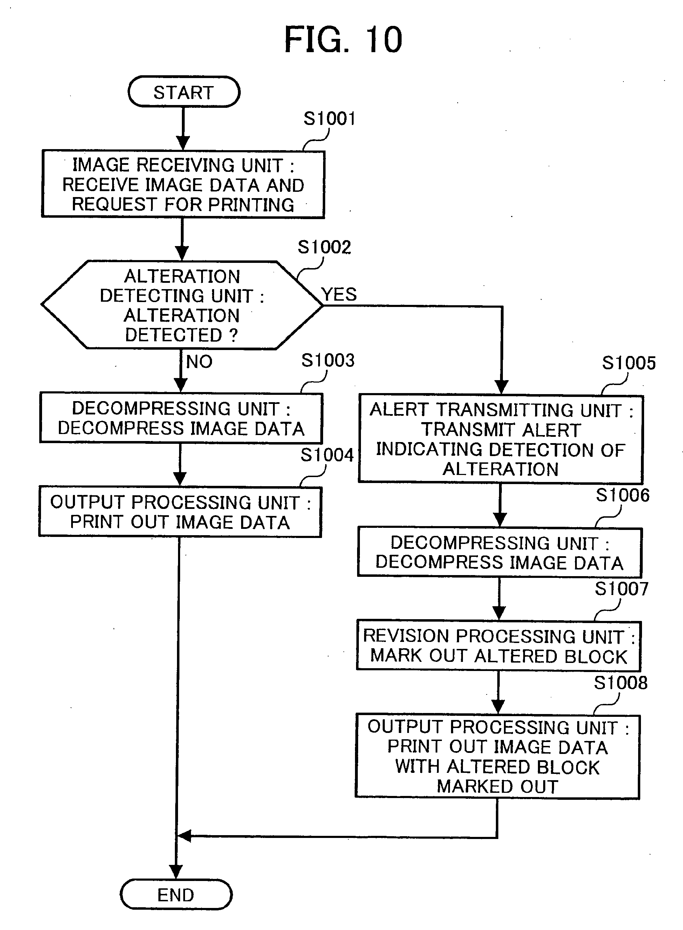

FIG. 10 is a flowchart of a processing procedure for the image forming apparatus 800, from reception of image data and a request to print out the image data from the PC to printing of the image data.

The image receiving unit 122 receives image data and a request to print out the image data from the PC 10 (step S1001). The image data received can be the image data that had been transmitted from the image forming apparatus 800 to the PC 10, or image data generated in the PC 10.

The alteration detecting unit 803 detects whether the image data received by the image receiving unit 122 has been altered (step S1002). When alteration detection information embedded in any of the blocks of the image data is destructed, the alteration detecting unit 803 determines that the image data has been altered. When alteration detection information is not extracted from any of the blocks of the image data, but a flag is extracted, the alteration detecting unit 803 determines that the image data has been altered.

When the alteration detecting unit 803 does not detect an alteration (No at step S1002), the decompressing unit 107 decompresses the image data according to need (step S1003). The output processing unit 805 prints out the image data on paper (step S1004).

When the alteration detecting unit 803 detects an alteration (Yes at step S1002), the alert transmitting unit 821 transmits an alert to the PC 10 that the image data transmitted from the PC 10 has been altered and thus will output the image data with the altered block marked out (step S1005). The decompressing unit 107 decompresses the image data according to need (step S1006).

When the alteration detecting unit 803 detects an alteration, the revision processing unit 806 marks out the block including altered image data (step 51007).

The output processing unit 805 prints out the image data with the altered block marked out (step S1008).

Accordingly, the image forming apparatus 800 detects whether image data received from the PC 10 or other devices has been altered, and controls output of the image data. Thus, when the PC 10 requests the image forming apparatus 800 to print out altered image data, the image data is printed out with the altered block marked out. Therefore, a user can recognize that the image data was altered.

A processing performed by the image forming apparatus 800, from when a user operates the touch panel to select image data to be printed out to when the image data is printed out, is similar to that shown in Fig. 6 performed by the image forming apparatus 100 according to the first embodiment. Specifically, referring to the flowchart in Fig. 10, step S602 in Fig. 6 is performed at step S1002 in Fig. 10, and step S605 in Fig. 6 is performed at steps 51005 to S1008 in Fig. 10. Otherwise, overlapping descriptions of the processing are omitted.

In the image forming apparatus 800 according to the second embodiment, when an alteration is detected in image data, the image data is printed out with the altered area marked out, so that a user can recognize that alteration has been performed. Accordingly, altered image data is prevented from leaking. Moreover, convenience is improved because areas that are not altered can be printed out without being marked out. Furthermore, reliability of image data output from the image forming apparatus 800 is enhanced. Moreover, convenience is improved because image data can be output according to a request from the PC 10 or other devices.

In the image forming apparatus 800 according to the second embodiment, when an alteration is detected in image data, the image data is printed out with the altered block revised. However, image data often includes an area where alteration is permitted and an area where alteration is inhibited. An image forming apparatus 1100 according to a third embodiment of the present invention specifies an area in image data where alteration is inhibited, and embeds an electronic watermark in the specified area. Furthermore, when an alteration is detected in the area embedded with the electronic watermark, the image forming apparatus 1100 outputs the image data with the altered area revised.

The image forming apparatus 1100 distinguishes an area that includes characters from an area that does not include characters in image data, and embeds an electronic watermark in at least one area. A user selects, in advance, the area in which alteration is to be inhibited.

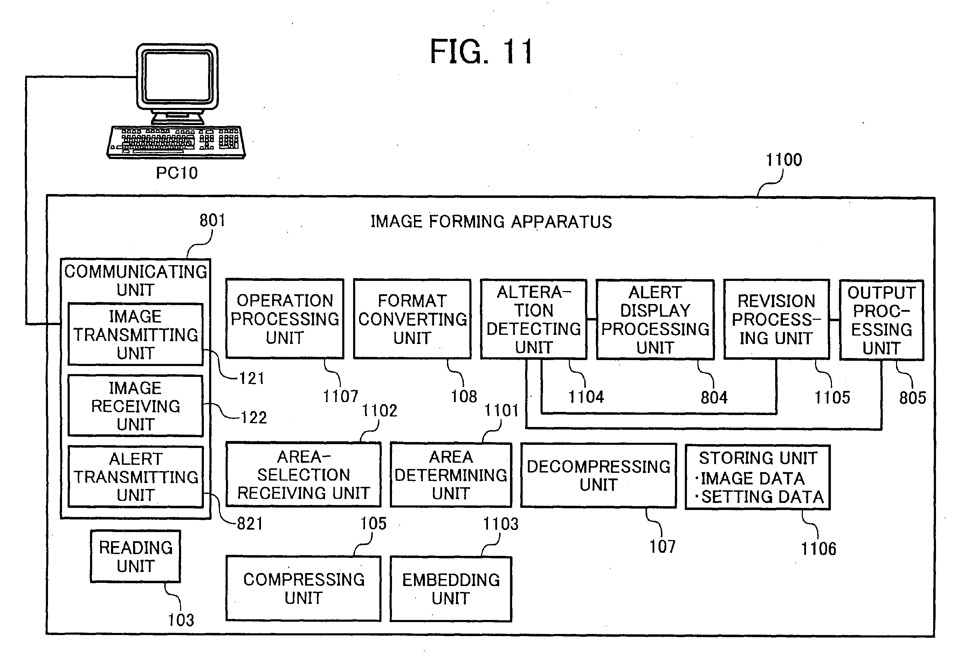

FIG. 11 is a block diagram of an image forming apparatus 1100 according to the third embodiment. The differences between the image forming apparatus 800 according to the second embodiment shown in Fig. 8 and the image forming apparatus 1100 are as follows. Instead of the storing unit 101, the operation processing unit 104, the embedding unit 802, the alteration detecting unit 803, and the revision processing unit 806, the image forming apparatus 1100 includes a storing unit 1106, an operation processing unit 1107, an embedding unit 1103, an alteration detecting unit 1104, and a revision processing unit 1105. Moreover, an area-selection receiving unit 1102 and an area determining unit 1101 are added to the image forming apparatus 1100. Otherwise, components common to the image forming apparatus 800 and the image forming apparatus 1100 are denoted by the same reference numerals, and overlapping descriptions are omitted.

The storing unit 1106 stores image data and setting data. The setting data is necessary for making settings when outputting the image data. For example, the setting data includes information specifying an area in which an electronic watermark is to be embedded.

The operation processing unit 1107 processes instructions from a user input through the touch panel. The operation processing unit 1107 performs the same processings as those performed by the operation processing unit 104 according to the second embodiment, and also selects an area in which an electronic watermark is to be embedded, according to a user's selection.

The area-selection receiving unit 1102 receives the selection of the area in which an electronic watermark is to be embedded from the operation processing unit 1107, and writes the selection in the setting data stored in the storing unit 1106. A selection is made from either a character area that includes characters only, or a non-character area that does not include characters. Furthermore, in the present embodiment, a selection can be made from either a black-character area including black characters only, or a non-black-character area including characters other than black characters.

The area determining unit 1101 determines whether each block in image data corresponds to a character area or a non-character area, according to a predetermined standard. The area determining unit 1101 then determines whether an electronic watermark is to be embedded in each block based on the setting data stored in the storing unit 1106.

Accordingly, a user is spared from setting whether an electronic watermark is to be embedded for each block. The user is only required to select whether an electronic watermark is to be embedded in a character area, a non-character area, or both. This facilitates operation and improves convenience for a user.

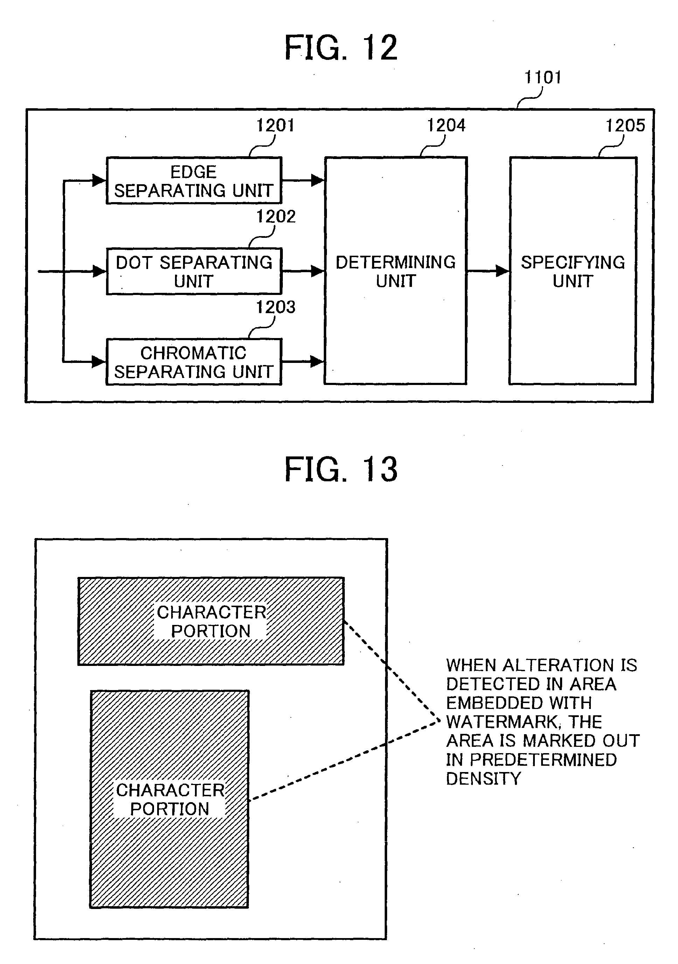

FIG. 12 is a detailed block diagram of the area determining unit 1101 shown in Fig. 11. The area determining unit 1101 includes an edge separation unit 1201, a dot separation unit 1202, a chromatic separation unit 1203, a determination unit 1204, and a specification unit 1205. To determine whether a block in image data is a character area, the edge separation unit 1201 detects a character edge in the image data, the dot separation unit 1202 detects a dot area in the image data, and the chromatic separation unit 1203 detects a chromatic area in the image data.

The standard for determining whether a block in image data is a character area is described below. When the edge separation unit 1201 detects a character edge, the dot separation unit 1202 does not detect a dot area, and the chromatic separation unit 1203 does not detect a chromatic area, the determination unit 1204 determines that the block includes black characters only. When the edge separation unit 1201 detects a character edge, the dot separation unit 1202 does not detect a dot area, and the chromatic separation unit 1203 detects a chromatic area, the determination unit 1204 determines that the block includes characters other than black characters. Otherwise, the determination unit 1204 determines that the block includes data other than characters.

The specification unit 1205 specifies all blocks determined as including black characters only as a black-character area, all blocks determined as including characters other than black characters as a non-black-character area, and all blocks determined as including data other than characters as a non-character area. Furthermore, an area including both the black-character area and the non-black-character area is specified as a character area.

Referring back to Fig. 11, the embedding unit 1103 embeds an electronic watermark in an area, based on a user's selection and a determination made by the area determining unit 1101. Specifically, the embedding unit 1103 embeds alteration detection information in the area that is determined as an area in which an electronic watermark is to be embedded, and embeds one flag for the entire image data. The Watermark strength of the flag is strong enough so that the flag can be extracted even after the image data has been altered significantly. Accordingly, alteration is detected in an area where alteration is inhibited while the other areas can be freely altered, thus improving convenience.

The alteration detecting unit 1104 detects alteration in image data that is requested to be output. According to the third embodiment, the alteration detecting unit 1104 performs the same processing as performed by the area determining unit 1101 to identify a character area and a non-character area in image data, and detects whether alteration is performed based on alteration detection information embedded in at least one area. The processing performed is not limited that performed by the area determining unit 1101. Any processing can be performed to obtain similar results.

When alteration detection information is not extracted from any area in image data, but a flag is extracted, the alteration detecting unit 1104 identifies, from the flag, an area that was embedded with alteration detection information. Accordingly, the alteration detecting unit 1104 determines that the identified area has been altered.

Specifically, the flag is represented by a number indicating an area in which alteration detection information was embedded. For example, 1 indicates all character areas, 2 indicates a non-character area, 3 indicates all areas, 4 indicates a black-character area, and 5 indicates a non-black-character area.

Thus, the alteration detecting unit 1104 can identify the area in which alteration detection information was embedded according to a flag. When alteration detection information is not extracted from the area indicated by the flag, the alteration detecting unit 1104 determines that image data in the area has been significantly altered such that the alteration detection information is completely destructed.

When a flag is not extracted from image data, the alteration detecting unit 1104 determines that an electronic watermark was never embedded in the image data.

When the alteration detecting unit 803 detects an alteration in an area in image data, the revision processing unit 1105 performs a revision processing on the corresponding area. After the revision processing is performed, the output processing unit 805 outputs the image data. Similarly to the second embodiment, the revision processing is performed by marking out image data within an altered area.

FIG. 13 is a schematic of an example of image data output by an output processing unit 805 with revision processing performed on an altered area. The revision processing unit 1105 marks out, in a predetermined density, an area in which the alteration detecting unit 1104 detected an alteration. In this example, it is assumed that an electronic watermark is embedded in a character area, and that the character area was altered. A user can recognize that the image data has been altered, and recognize the altered area. On the other hand, when an area not embedded with an electronic watermark is altered, the revision processing unit 1105 does not mark out the area. Therefore, the area is printed out normally, so that a user can recognize the altered contents.

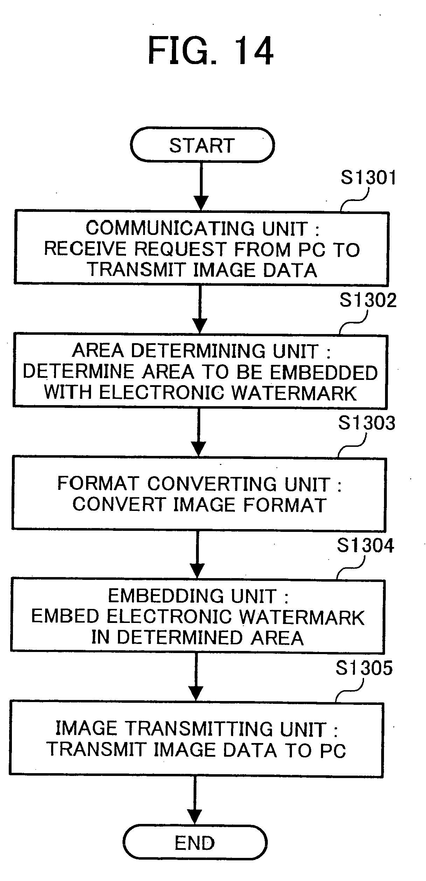

FIG. 14 is a flowchart of a processing procedure for the image forming apparatus 1100, from reception of a request to transmit image data the PC 10 to transmission of the image data to the PC 10.

The communicating unit 102 receives a request from the PC 10 to transmit image data stored in the storing unit 1106 to the PC 10 (step S1301).

The area determining unit 1101 identifies a character area and a non-character area in the image data, and determines the area to be embedded with an electronic watermark based on setting data stored in the storing unit 1106 (step S1302). The area determining unit 1101 further identifies a black-character area and a non-black-character area in the character area, and determines the area to be embedded with an electronic watermark among these areas.

The format converting unit 108 acquires the corresponding image data from the storing unit 101, and converts the image data into a format viewable in the PC 10 (step S1303). When the corresponding image data is already in a format viewable in the PC 10, the format need not be converted.

The embedding unit 1103 embeds an electronic watermark in the image data subjected to format conversion, in the area determined to be embedded with an electronic watermark (step S1304). The embedding unit 1103 embeds alteration detection information and a flag in the image data as the electronic watermark. Instead, the embedding unit 1103 can confirm whether a flag is embedded in the image data, and embed alteration detection information only when it is determined that an electronic watermark is not embedded.

The image transmitting unit 121 transmits the image data embedded with the electronic watermark to the PC 10 (step S1305) .

Accordingly, image data stored in the image forming apparatus 1100 can be viewed in the PC 10 or other devices. Moreover, an alteration can be detected even when image data is altered in a device other than the image forming apparatus 1100.

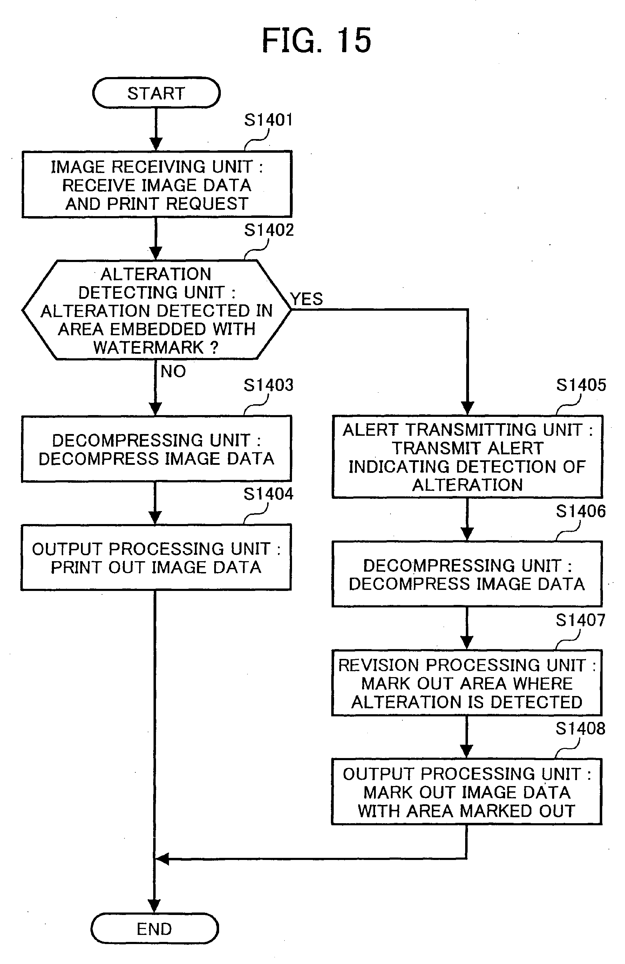

FIG. 15 is a flowchart of a processing procedure for the image forming apparatus 1100, from reception of image data and a request to print out the image data from the PC 10 to printing of the image data.

The image receiving unit 122 receives image data and a request to print out the image data from the PC 10 (step S1401). The image data received can be the image data that had been transmitted from the image forming apparatus 1100 to the PC 10, or image data generated in the PC 10.

The alteration detecting unit 1104 identifies an area that was embedded with an electronic watermark in the image data received by the image receiving unit 122, and detects whether the identified area has been altered (step S1402). When alteration detection information embedded in at least one area is destructed, the alteration detecting unit 1104 determines that the image data in the corresponding area is altered. When alteration detection information is not extracted from any area in the image data, the alteration detecting unit 1104 determines whether a flag is embedded. When a flag is embedded, the alteration detecting unit 1104 determines the altered area according to the flag.

When the alteration detecting unit 1104 does not detect an alteration (No at step S1402), the decompressing unit 107 decompresses the image data according to need (step S1403). The output processing unit 805 prints out the image data on paper (step S1404).

When the alteration detecting unit 1104 detects an alteration (Yes at step S1402), the alert transmitting unit 821 transmits an alert to the PC 10 that the image data transmitted from the PC 10 has been altered and thus will output the image data with the altered area marked out (step S1405). The decompressing unit 107 decompresses the image data according to need (step S1406).

When the alteration detecting unit 1104 detects an alteration, the revision processing unit 1105 marks out the area including altered image data (step S1407).

The output processing unit 805 prints out the image data with the altered area marked out (step S1408).

Accordingly, the image forming apparatus 1100 detects whether image data received from the PC 10 or other devices has been altered, and controls output of the image data. Thus, when the PC 10 requests the image forming apparatus 1100 to print out altered image data, the image data is printed out with the altered area marked out. Therefore, a user can recognize that the image data was altered.

A processing performed by the image forming apparatus 1100, from when a user operates the touch panel to select image data to be printed out to when the image data is printed out, is similar to that shown in Fig. 6 performed by the image forming apparatus 100 according to the first embodiment. Specifically, referring to the flowchart in Fig. 15, step S602 in Fig. 6 is performed at step S1402 in Fig. 15, and step S605 in Fig. 6 is performed at steps S1405 to S1408 in Fig. 15. Otherwise, overlapping descriptions of the processing are omitted.

Accordingly, when an alteration is detected in image data selected by a user with the touch panel of the image forming apparatus 1100, the image data is printed out with the altered area marked out.

Image data is not limited to being distinguished into a character area and a non-character area. For example, the area can be distinguished into a dot area.and a non-dot area. Image data can be distinguished into different areas according to various standards based on a pattern, a color, an edge, etc., as long as the image forming apparatus 1100 can distinguish the areas, and the areas can be embedded with an electronic watermark.

In the image forming apparatus 1100 according to the third embodiment, an area embedded with an electronic watermark is identified, and when an alteration is detected in the identified area, the image data is printed out with the altered area marked out, so that a user can recognize that alteration has been performed. Accordingly, altered image data is prevented from leaking. Moreover, a user is inhibited from referring to an altered area, but is allowed to refer to an unaltered area in image data. Therefore, only altered image data is prevented from leaking, and unaltered image data is communicated.

An electronic watermark is embedded in either one of a character area or a non-character area, according to a user's selection. Thus, when an alteration is detected, the area selected by the user is marked out. Accordingly, only altered image data in an area where alteration is inhibited by a user is prevented from leaking.

Moreover, convenience is improved because an unaltered area is printed out normally, image data can be output according to a request from the PC 10 or other devices, and areas without an electronic watermark embedded can be freely altered. Furthermore, reliability of image data output from the image forming apparatus 1100 is enhanced.

The present invention is not limited to the above embodiments, and various modifications can be made without departing from the spirits of the invention. Examples of modifications are described below.

According to the second embodiment, when an alteration is detected in a block in image data, a revision processing is performed by marking out the corresponding block. Similar results can be obtained by erasing the corresponding block.

Specifically, when an alteration detecting unit in an image forming apparatus detects an alteration in a block in image data requested to be printed out, an output processing unit erases the corresponding block, so that the output has an empty space where the block is erased. Accordingly, a user is prevented from referring to the altered contents, and altered image data is prevented from leaking.

Altered image data is not limited to being erased by units of blocks; altered image data can be erased by units of areas distinguished by various standards as described in the third embodiment.

The revision processing can be performed by printing VOID on an altered area or by any other method as long as a user can recognize the alteration.

In the embodiments and the modifications, an image forming apparatus such as a multi-function peripheral (MFP) is considered to execute a function of an alteration detecting device, to which the present embodiment is not limited. For example, an image reading device such as a scanner can detect an alteration in an area in image data embedded with an electronic watermark, perform revision processing on the corresponding area, and output the image data through a PC connected to the scanner.

Moreover, a PC can execute an alteration detection program to realize the function of the alteration detecting device. In this case, the PC is connected to a scanner or a printer through a network, and an electronic watermark is embedded in image data received from these devices. An electronic watermark can be embedded in image data received from a compact disk (CD), etc.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An apparatus for detecting an alteration in an image, the apparatus comprising:
an alteration detecting unit (109) that detects the alteration in the image based on an electronic watermark embedded in the image; and
an output processing unit (111) that outputs the image, when no alteration is detected in the image.

2. An apparatus for detecting an alteration in an image, the apparatus comprising:
an alteration detecting unit (803, 1104) that detects the alteration in a predetermined area of the image based on an electronic watermark embedded in the predetermined area; and
a revision processing unit (806, 1105) that performs a predetermined revision process on an area image indicating the predetermined area, when the alteration is detected in the predetermined area.

3. The apparatus according to claim 2, wherein
the image is divided into a plurality of blocks in a predetermined size, in each of the blocks the electronic watermark is embedded,
the alteration detecting unit (803) detects the alteration in each of the blocks using the watermark embedded in each of the blocks, and
the revision processing unit (806) performs the predetermined revision process on the area image in a block from which the alteration is detected.

4. The apparatus according to claim 2, wherein
the alteration detecting unit (1104) identifies an area in which the electronic watermark is embedded in the image, and detects the alteration using the electronic watermark embedded in the area identified; and
the revision processing unit (1105) performs the predetermined revision process on the area identified.

5. The apparatus according to claim 4, wherein
the alteration detecting unit (1104) identifies a character area indicating an area determined to be characters and a non-character area indicating an area determined to be other than the characters, and detects the alteration using the electronic watermark embedded in at least one of the character area and the non-character area.

6. The apparatus according to claim 1 or 2, wherein
the alteration detecting unit (109, 803, 1104) extracts first information indicating whether second information that is necessary for detecting the alteration is embedded in the image from the image, determines whether the second information is embedded in the image based on the first information, and detects the alteration when the second information is determined to be embedded in the image but is not presently embedded.

7. The apparatus according to claim 2, further comprising:
an output unit (805) that outputs the image including the area image on which the predetermined revision process is performed by the revision processing unit (806, 1105).

8. The apparatus according to claim 2, wherein
the predetermined revision process is marking out the area image.

9. The apparatus according to claim 2, wherein
the predetermined revision process is erasing the area image.

10. The apparatus according to claim 1 or 2, further comprising:
an alerting unit (110, 804) that issues an alert when the alteration is detected.

11. The apparatus according to claim 1 or 2, further comprising:
an image receiving unit (122) that receives an image from other communication device (10), wherein
the alteration detecting unit (109, 803, 1104) detects the alteration in the image received.

12. The apparatus according to claim 11, further comprising:
an alert transmitting unit (123, 821) that transmits an alert to the other communication device (10), when the alteration is detected.

13. The apparatus according to claim 1 or 2, further comprising:
a storing unit (101, 1106) that stores an image received from other communication device (10); wherein
the alteration detecting unit (109, 803, 1104) detects the alteration in the image stored in the storing unit (109, 803, 1104), when the image is selected to be output.

14. A method of detecting an alteration in an image, the method comprising:
detecting the alteration in the image based on an electronic watermark embedded in the image; and
outputting the image, when no alteration is detected in the image.

15. A method of detecting an alteration in an image, the method comprising:
detecting the alteration in a predetermined area of the image based on an electronic watermark embedded in the predetermined area; and
performing a predetermined revision process on an area image indicating the predetermined area, when the alteration is detected in the predetermined area.

16. The method according to claim 15, wherein
the image is divided into a plurality of blocks in a predetermined size, in each of the blocks the electronic watermark is embedded,
the detecting includes detecting the alteration in each of the blocks using the watermark embedded in each of the blocks, and
the performing includes performing the predetermined revision process on the area image in a block from which
the alteration is detected.

17. The method according to claim 15, wherein
the detecting includes
identifying an area in which the electronic watermark is embedded in the image; and
detecting the alteration using the electronic watermark embedded in the area identified; and
the performing includes performing the predetermined revision process on the area identified.

18. The method according to claim 17, wherein
the identifying includes identifying a character area indicating an area determined to be characters and a non-character area indicating an area determined to be other than the characters, and
the detecting includes detecting the alteration using the electronic watermark embedded in at least one of the character area and the non-character area.

19. The method according to claim 14 or 15, wherein
the detecting includes
extracting first information indicating whether second information that is necessary for detecting the alteration is embedded in the image from the image, determining whether the second information is embedded in the image based on the first information, and
detecting the alteration when the second information is determined to be embedded in the image but is not presently embedded.

20. The method according to claim 15, further comprising:
outputting the image including the area image on which the predetermined revision process is performed at the performing.

21. The method according to claim 15, wherein
the predetermined revision process is marking out the area image.

22. The method according to claim 15, wherein
the predetermined revision process is erasing the area image.

23. The method according to claim 14 or 15, further comprising:
issuing an alert when the alteration is detected.

24. The method according to claim 14 or 15, further comprising:
receiving an image from other communication device, wherein
the detecting includes detecting the alteration in the image received.

25. The method according to claim 24, further comprising:
transmitting an alert to the other communication device, when the alteration is detected.

26. The method according to claim 14 or 15, further comprising:
storing an image received from other communication device, wherein
the detecting includes detecting the alteration in the image stored, when the image is selected to be output.

27. A computer-readable recording medium that stores a computer program that causes a computer to execute the method according to any one of claims 14 to 26.
